# EUROPÄISCHE PATENTSCHRIFT

(11) **EP 0 305 725 B1**
(45) Veröffentlichungstag und Bekanntmachung des Hinweises auf die Patenterteilung: **26.01.1994**
(21) Anmeldenummer: 88111952.3
(22) Anmeldetag: 25.07.1988
(51) Int. Cl.: H04N 3/22

(54) **Schaltungsanordnung zur Korrektur von Geometrieverzerrungen**
Geometric distortion-correcting circuit
Circuit de correction de la distorsion de géométrie

(30) Priorität: 04.09.1987 DE 3729676
(43) Veröffentlichungstag der Anmeldung: 08.03.1989
(73) Patentinhaber: Deutsche Thomson-Brandt GmbH, 78003 Villingen-Schwenningen (DE)
(72) Erfinder: Dieterle, Franz, D-7742 St. Georgen (DE); Ohnemus, Fritz, D-7730 Villingen-Schwenningen (DE); Hartmann, Uwe, D-7730 Villingen-Schwenningen (DE)

(56) Entgegenhaltungen:
- DE-B- 1 287 120
- DE-B- 2 254 702
- US-A- 4 296 359
- US-A- 4 642 530

## Beschreibung

Die Erfindung betrifft eine Schaltungsanordnung zur Korrektur von Geometrieverzerrungen bei der Wiedergabe von Signalen auf dem Schirm einer Kathodenstrahlröhre eines Bildwiedergabegerätes mit einer Einrichtung zur Einkopplung eines zeilenfrequenten Korrekturstromes in den Schaltungskreis, der die Elektronenstrahlen in vertikaler Richtung ablenkt.

Da die Farbbildröhren von Bildwiedergabegeräten gegenwärtig bei der Herstellung bereits mit den Mitteln zur Ablenkung der Elektronenstrahlen versehen werden, ist für die Justierung der Ablenkeinheit in Bezug auf die Bildröhre bei der Montage eine große Genauigkeit erforderlich. Die optimale Positionierung der Ablenkeinheit auf dem Hals der Bildröhre muß abgestimmt werden auf Farbreinheit, Punktschärfe und Konvergenz. Da die Strahlsysteme in einer Farbbildröhre unvermeidbare Toleranzen besitzen, kann die optimale Position der Ablenkeinheit nur ein Kompromiss zwischen den geforderten Einstellungen sein. Bei vielen Bildrohreinheiten bleibt deshalb ein diesen eigentümlicher Fehler bestehen, der dadurch gekennzeichnet ist, daß waagerechte Linien gegenüber dem waagerechten Bezugsraster eine kleine Winkelverdrehung besitzen, d. h. die waagerechten Linien werden um Punkte, die auf der Mittelsenkrechten des Bildes liegen, gedreht, so daß sie eine leicht abfallende oder ansteigende Tendenz zeigen. Ein derartiger Winkelfehler ist besonders bei der Darstellung von Schriftzügen auffallend.

Es sind Schaltungen bekannt, die Geometrieverzerrungen in Form von Kissenverzeichnungen auf dem Bildschirm beseitigen. Dazu wird ein zeilenfrequenter Korrekturstrom über ein nichtlineares Bauelement wie z.B. einen Transduktor in die Vertikalablenkschaltung eingekoppelt. Zur Korrektur dieser speziellen Verzerrung muß der zeilenfrequente Strom zunächst in eine Parabelform umgewandelt werden, was aber aufwendig ist ( DE-A-19 16 104 ).

In der US-A-4 296 359 wird eine Schaltung beschrieben, der auch die Aufgabe zugrunde liegt, ein verdrehtes Raster auf dem Bildschirm einer Fernsehbildröhre zu korrigieren, indem die gegenseitig verdrehten Raster für Blau und Rot wieder zur Deckung gebracht werden sollen. Hierzu wird eine gesonderte Ablenkwicklung eingeführt, die ein Magnetfeld in Richtung des Strahlstromes in der fernsehbildröhre erzeugt. Dadurch wird eine kombinierte Verdrehung der horizontalen und vertikalen Linien erreicht. Der Wirkungsgrad ist hier aber wegen des großen Abstandes der Wicklung schlecht.

Die Erfindung beschränkt sich allein auf die Beseitigung des oben beschriebenen Fehlers und es liegt dieser deshalb die Aufgabe zugrunde, mit möglichst einfachen Mitteln den Fehler der verdrehten waagerechten Linien zu beseitigen. Diese Aufgabe wird durch die im Patentanspruch angegebene Erfindung gelöst.

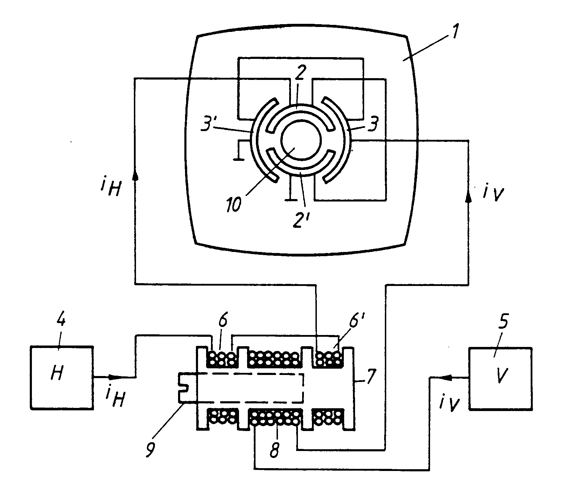

Nachstehend wird die Erfindung an einem Ausführungsbeispiel mit Hilfe der Zeichnung beschrieben.

Auf dem Bildröhrenhals 10 einer Wiedergaberöhre 1 befindet sich die Ablenkeinheit zur Ablenkung der Elektronenstrahlen. Sie besteht aus den Horizontalablenkspulen 2 und 2' sowie aus den Vertikalablenkspulen 3 und 3'. Die Ablenkspulen 2, 2', 3, 3' werden von Strömen i_{H} aus der Zeilenendstufe 4 und i_{V} aus der Vertikalendstufe 5 gespeist. In den Stromkreis für den Zeilenablenkstrom ist die Primärwicklung 6, 6' eine Differentialtransformators 7 geschaltet. Die Sekundärwicklung 8 dieses Differentialtransformators 7 ist in den Vertikalablenkstromkreis eingeschleift. Mit Hilfe eines Ferritkerns 9 kann in an sich bekannter Weise der eingekoppelte Strom asymmetrisch verändert werden, um auch asymmetrische Fehler zu erfassen.

Durch die Einkopplung eines sägezahnförmigen, zeilenfrequenten Stromes in den Vertikalablenkkreis entstehen am Zeilenanfang und am Zeilenende entgegengesetzt gerichtete Korrekturströme, so daß die gewünschte Wirkung einer Drehung eintritt. Da die Anordnung sehr klein ist und vom Zeilen- und Vertikalstrom direkt durchflossen wird, kann sie unmittelbar in der Nähe der Ablenkeinheit angebracht und gegebenenfalls mit dieser zu einer Einheit integriert werden.

## Patentansprüche

1. Schaltungsanordnung zur Korrektur von Geometrieverzerrungen bei der Wiedergabe von Signalen auf dem Schirm einer Kathodenstrahlröhre eines Bildwiedergabegerätes mit einer Einrichtung zur Einkopplung eines zeilenfrequenten Korrekturstromes über einen Differentialtransformator in den Schaltungskreis, der die Elektronenstrahlen in vertikaler Richtung ablenkt, **dadurch gekennzeichnet,** daß die Primärwicklung (6, 6') des Differentialtransformators (7) in den Stromkreis des Zeilenablenkstromes (iH) geschaltet ist, und daß die Sekundärwicklung (8) des Differentialtransformators (7) in den Stromkreis des Vertikalablenkstromes (iV) geschaltet ist, wobei der sägezahnförmige zeilenfrequente Korrekturstrom in den Vertikalablenkkreis derart eingekoppelt wird, daß unter einem Winkel gegen das waagerechte Bezugsraster geneigte Zeilen des wiedergegebenen Bildes um Mittelpunkte gedreht werden, die auf der Mittelsenkrechten des Bildes liegen, wobei der Differentialtransformator (7) zwei Primärwicklungen (6, 6') besitzt, die in Kammern des Spulenkörpers des Differentialtransformators in einem axialen Abstand entsprechend gewickelt liegen, zwischen denen eine Kammer zur Aufnahme der Sekundärwicklung (8) angeordnet ist, und daß die Kopplung der Primärwicklungen (6, 6') auf die Sekundärwicklung (8) mit Hilfe eines sich in axialer Richtung zum Spulenkörper erstreckenden Ferritkerns (9) erfolgt und damit Größe und Richtung des eingekoppelten Stroms einstellbar sind.

## Claims

1. A circuit arrangement for the correction of geometric distortions during the reproduction of signals on the screen of a cathode-ray tube of a picture reproduction device with an arrangement for the coupling in of a correction current at line-frequency via a differential transformer in the switching circuit which deflects the electron beams in the vertical direction, characterised in that the primary winding (6,6') of the differential transformer (7) is connected in the circuit of the line deflection current (iH), and in that the secondary winding (8) of the differential transformer (7) is connected in the circuit of the vertical deflection current (iV), the saw-tooth-like correction current at line frequency in the vertical deflection circuit being coupled in such that lines of the reproduced picture which are inclined at an angle to the horizontal reference raster are rotated about centres which lie on the mid-vertical of the picture, the differential transformer (7) having two primary windings (6,6'), which are located in sections of the bobbin of the differential transformer and wound correspondingly at an axial spacing, and between which is arranged a section for accommodating the secondary winding (8), and in that the coupling of the primary windings (6,6') with the secondary winding (8) is assisted by a ferrite core (9) extending axially of the bobbin and thereby magnitude and direction of the coupled-in current are adjustable.

## Revendications

1. Circuit de correction de distorsions de géométrie lors de la restitution de signaux sur l'écran d'un tube cathodique d'un appareil de restitution d'images avec un dispositif pour alimenter un courant de correction à fréquence ligne par l'intermédiaire d'un transformateur différentiel dans le circuit qui dévie les faisceaux d'électrons dans le sens vertical, **caractérisé en ce** que l'enroulement primaire (6, 6') du transformateur différentiel (7) est mis en circuit dans le circuit du courant de balayage ligne (iH) et que l'enroulement secondaire (8) du transformateur différentiel (7) est mis en circuit dans le circuit du courant de balayage vertical (iV), le courant de correction en dents de scie, à fréquence ligne, étant alimenté dans le circuit de balayage vertical de telle manière que des lignes de l'image restituée qui sont inclinées par rapport à la trame de référence horizontale en formant un angle sont tournées autour de centres qui se trouvent sur la médiatrice de l'image, le transformateur différentiel (7) possédant deux enroulements primaires (6, 6'), qui se trouvent enroulés dans des compartiments du corps de bobine du transformateur différentiel à une distance axiale en conséquence, entre lesquels il est placé un compartiment pour le logement de l'enroulement secondaire (8) et que le couplage des enroulements primaires (6, 6') sur l'enroulement secondaire (8) se fait à l'aide d'un core de ferrite (9) qui s'étend dans le sens axial vers le corps de bobine et avec lequel la grandeur et le sens du courant alimenté sont réglables.
